# EUROPEAN PATENT SPECIFICATION

(11) **EP 4 224 167 B1**
(45) Date of publication and mention of the grant of the patent: **16.07.2025**
(21) Application number: 21874779.8
(22) Date of filing: 16.03.2021
(51) Int. Cl.: G01N 35/00, G01N 35/02, G01N 35/10, G01N 35/04

(54) **AUTOMATED ANALYZER, WORK ASSISTANCE DEVICE, AND AUTOMATED ANALYSIS SYSTEM**
AUTOMATISIERTER ANALYSATOR, ARBEITSUNTERSTÜTZUNGSVORRICHTUNG UND AUTOMATISIERTES ANALYSESYSTEM
ANALYSEUR AUTOMATISÉ, DISPOSITIF D'AIDE AU TRAVAIL, ET SYSTÈME D'ANALYSE AUTOMATISÉ

(30) Priority: 29.09.2020 JP 2020162909
(43) Date of publication of application: 09.08.2023
(73) Proprietor: HITACHI HIGH-TECH CORPORATION, Tokyo 105-6409 (JP)
(72) Inventor: YOSHIKAWA, Keiko, Tokyo 105-6409 (JP); TAKAYAMA, Hiroyuki, Tokyo 105-6409 (JP)
(74) Representative: Strehl & Partner mbB
(86) International application number: PCT/JP2021/010619
(87) International publication number: WO 2022/070471

(56) References cited:
- WO-A1-2020/021837
- WO-A1-2020/021837
- JP-A- 2005 242 692
- JP-A- 2007 040 900
- JP-A- 2010 230 560
- JP-A- 2012 088 190
- JP-A- 2016 068 233
- JP-A- 2019 197 021
- JP-A- 2019 197 021
- US-A1- 2017 217 027
- US-A1- 2017 217 027
- US-B1- 6 673 316

## Description

### Technical Field

The present invention relates to an automatic analyzer, a work support device, and an automatic analysis system.

### Background Art

In recent years, urine and other tests are becoming centralized, and there is a growing need to efficiently process a large number of samples by a small number of operators. Therefore, attempts have been made to automate some of work that is maintenance and the like and was conventionally performed by operators.

For example, Patent Literature 1 discloses an automatic analyzer that uses a robot arm to transport a reagent bottle from a predetermined position into reagent storage to replace the reagent bottle (storage member) (paragraphs 0031 to 0035 and the like of Patent Literature 1).

### Citation List

### Patent Literature

Patent Literature 1: Japanese Unexamined Patent Application Publication No. 2014-178311

A transportation system for an analyte measurement device employing a robot, which is related to the automatic analyzer and the work support device of the present invention, is disclosed in JP 2019 197021 A and WO2020/021837 A1.

### Summary of Invention

### Technical Problem

However, even when the storage member is automatically transported as described in Patent Literature 1, it is necessary to perform manual work by an operator for a part of loading and/or unloading, such as an operation on the reagent storage side.

An object of the present invention is to provide an automatic analyzer, a work support device, and an automatic analysis system that are able to reduce manual work by an operator.

### Solution to Problem

To solve the above-described problems, the present invention provides the automatic analyzer and the work support device defined in independent claims 1 and 7. The present invention further provides the automatic analysis system including an automatic analyzer and a work support device as it is defined in claim 11. Further advantageous features of the present invention are set out in the dependent claims.

### Advantageous Effects of Invention

It is possible to provide an automatic analyzer, a work support device, and an automatic analysis system that are able to reduce manual work by an operator.

### Brief Description of Drawings

[Fig. 1] Fig. 1 is a schematic configuration diagram of an automatic analysis system according to an embodiment.
[Fig. 2] Fig. 2 is a functional block diagram of the automatic analysis system according to the embodiment.
[Fig. 3] Fig. 3 is a flowchart illustrating a procedure for work regarding loading and/or unloading of a storage member in the automatic analysis system according to the embodiment.
[Fig. 4A] Fig. 4A is a flowchart illustrating a procedure for work regarding unloading of a reaction vessel in an automatic analysis system according to Example 1.
[Fig. 4B] Fig. 4B is a flowchart illustrating a procedure for work regarding loading of a reaction vessel in the automatic analysis system according to Example 1.
[Fig. 5] Fig. 5 is a flowchart illustrating a procedure for work regarding loading and/or unloading of a detergent bottle in an automatic analysis system according to Example 2.
[Fig. 6] Fig. 6 is a flowchart illustrating work regarding loading and/or unloading of a reagent vessel in an automatic analysis system according to Example 3.

### Description of Embodiments

Embodiments of the present invention are described in detail with reference to the drawings.

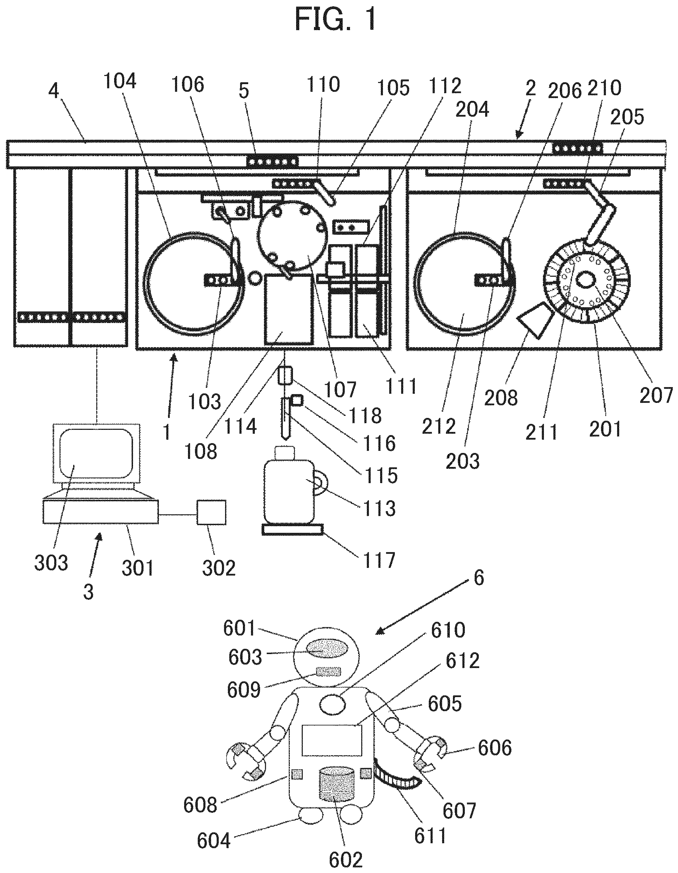

Fig. 1 is a schematic configuration diagram of an automatic analysis system according to the present embodiment. As illustrated in Fig. 1, the automatic analysis system according to the present embodiment includes an analyzer 1, an analyzer 2, a control device 3, a specimen transport device 4, and a work support device 6.

The analyzer 1 mainly analyzes an immunity item and includes a reagent cooler 104, a specimen dispensing mechanism 105, a reagent dispensing mechanism 106, a reaction acceleration unit 107, and a measurement unit 108. The reagent cooler 104 controls a temperature of a reagent vessel 103 storing a reagent to be used for analysis to be within a predetermined temperature range. The specimen dispensing mechanism 105 dispenses a specimen within a specimen vessel 5 into the reagent vessel. The reagent dispensing mechanism 106 dispenses the reagent within the reagent vessel 103 into the reaction vessel. The reaction vessel storing a reaction solution in which the specimen and the reagent are mixed is set on the reaction acceleration unit 107, and the reaction acceleration unit 107 accelerates the reaction by maintaining the reaction solution in a predetermined temperature range. An example of the reaction acceleration unit 107 is an incubator that controls a temperature by heating its surroundings by a heater or the like in a state in which a plurality of reaction vessels are arranged on the circumference. The measurement unit 108 optically measures a quantity of a substance in the reaction solution in which the reaction is accelerated by the reaction acceleration unit 107. For example, the measurement unit 108 measures a quantity of light emitted when the reagent is added to the reaction solution and a voltage is applied.

Depending on analytical performance required for the analyzer **1,** carryover between specimens may be taken into consideration, and when the specimen dispensing mechanism 105 dispenses a specimen, and each time the specimen is changed, a replaceable dispensing tip may be used at a part that comes into contact with the specimen, and an unused reaction vessel may be used for each time. In this case, the dispensing tip used once and the reaction vessel used once are discarded. Therefore, a new dispensing tip and a new reaction vessel that are required to perform analysis for a predetermined time period are stored in a consumable storage unit 111 and supplied by a consumable transport unit 112 to a location where the new dispensing tip and the new reaction vessel are used.

In addition, the analyzer 1 includes a detergent bottle 113 storing a detergent that is a system reagent. The analyzer 1 uses a pump or the like to suck up the detergent within the detergent bottle 113 and causes the detergent to flow to the measurement unit 108 so as to clean the inside of the measurement unit 108 for each time of measurement. A flow path 114 from the detergent bottle 113 to the measurement unit 108 is formed of a resin tube or the like and has a metal nozzle 115 at a distal end on the detergent bottle 113 side. The metal nozzle 115 is connected to a belt that is driven by a motor, and can be moved upward and downward by this drive mechanism. To aspirate the detergent within the detergent bottle 113, the nozzle 115 is moved downward such that the distal end of the nozzle is immersed in the liquid surface of the detergent. On the other hand, to replace the detergent bottle 113, the nozzle 115 is moved upward such that the distal end of the nozzle 115 is at a position higher than an upper end of the detergent bottle 113. In this case, conventionally, an operator performs work of removing the detergent bottle 113 used and setting a new detergent bottle 113. However, as described below, in Example **2,** a work support device 6 supports such work. In an automatic analyzer according to Example 2, a nozzle detector 116 that detects the height of a nozzle 115 is also used to replace a detergent bottle 113.

Since the capacity of the detergent bottle 113 is already determined, the control device 3 (work time calculator described later) can calculate an available capacity of the detergent bottle 113 based on information of a time when a detergent bottle 113 was previously replaced, the number of times that the detergent bottle 113 was used, and the like. Alternatively, to accurately detect a remaining amount of the detergent, a liquid surface detector 118 may be provided in the middle of the flow path 114. When it is estimated that the remaining amount of the detergent is equal to or less than a predetermined amount, the control device 3 issues an alarm to alert the operator that it is almost time to replace the detergent bottle 113. In addition, for example, even when two or more detergent bottles 113 are set, one of the detergent bottles 113 is empty, and an alarm is issued, the nozzle 115 may be automatically switched to the other detergent bottle 113 and cleaning and measurement operations may not be stopped. The remaining amount of the detergent may be detected by a weight sensor 117 provided under the detergent bottle 113 or a liquid surface height detection sensor provided in the detergent bottle 113.

Meanwhile, the analyzer 2 analyzes a biochemical item and includes a reagent cooler 204, a specimen dispensing mechanism 205, a reagent dispensing mechanism 206, and a measurement unit 208 in a similar manner to the analyzer 1. The analyzer 2 also includes a reagent disk 207. A plurality of reagent vessels 201 storing a reaction solution in which a specimen and a reagent dispensed are mixed are arranged on the circumference of the reaction disk 207. The reaction disk 207 is rotatable by a drive mechanism. The reaction vessels 201 are fixed onto the reaction disk 207 by fixing screws 211. In addition, the measurement unit 208 of the analyzer 2 measures light absorbance of the reaction solution within the reaction vessels 201 supported on the reaction disk 207.

A reagent disk (not illustrated) is provided in the reagent cooler 204. A plurality of reagent vessels 203 are arranged on the circumference of the reagent disk. In addition, a lid 212 is attached to an upper opening portion of the reagent cooler 204 to prevent cold air from leaking and prevent a reagent from vaporizing. The lid 212 can be locked and unlocked by a drive mechanism (not illustrated).

Next, the control device 3 includes a controller 301 that controls operations, temperatures, and the like of the drive mechanisms included in the analyzers 1 and 2, a communication unit 302 that transmits and receives a signal to and from the work support device 6, a display unit 303 that displays an analysis result and an alarm, and an operation unit (not illustrated) to be used by an operator to perform inputting. In Fig. 1, the control device 3 is commonly provided for the analyzers 1 and 2. However, each of the analyzers 1 and 2 may include a control device 3. In addition, the specimen transport device 4 transports a specimen vessel 5 such as a blood collection tube storing a sample (specimen) to be analyzed to specimen aspiration positions 110 and 210.

The work support device 6 according to the present embodiment supports work of unloading and loading storage members used in the analyzers 1 and 2, such as the reaction vessel, the detergent bottle 113, and the reagent vessel 203. As the work support device 6, a self-propelled robot that is autonomously drive is assumed. The work support device 6 according to the present embodiment includes a communication unit 610 that transmits and receives a signal to and from the communication unit 302 on the automatic analyzer side, a traveling unit 604 such as a wheel for traveling to a different position according to a type of a storage member, a hand 606 that grips and releases the storage member, and an arm 605 that moves the hand 606 to a predetermined position. The hand 606 is rotatable and can tighten and untighten a screw by rotating while griping the screw or the like.

In addition, the work support device 6 includes a reader 609 that reads identification information given to the storage member, such as a barcode or a two-dimensional code, an aspiration unit 611 that aspirates condensed water on the back of the lid 212 of the reagent cooler 204, and a storage member holder 612 that holds a storage member to be newly loaded onto the analyzers 1 and 2 and a storage member to be unloaded for discarding. The work support device 6 includes a camera 603 that recognizes a positional relationship of an object targeted for work support via image recognition, an obstacle sensor 608 that detects an obstacle and prevent contact, a hand opening/closing detector 607 that detects opening and closing of the hand 606, and the like.

A controller 602 installed in a body 601 of the work support device 6 controls each of the units described above. In addition, the work support device 6 according to the present embodiment can receive GPS position information via the communication unit 610.

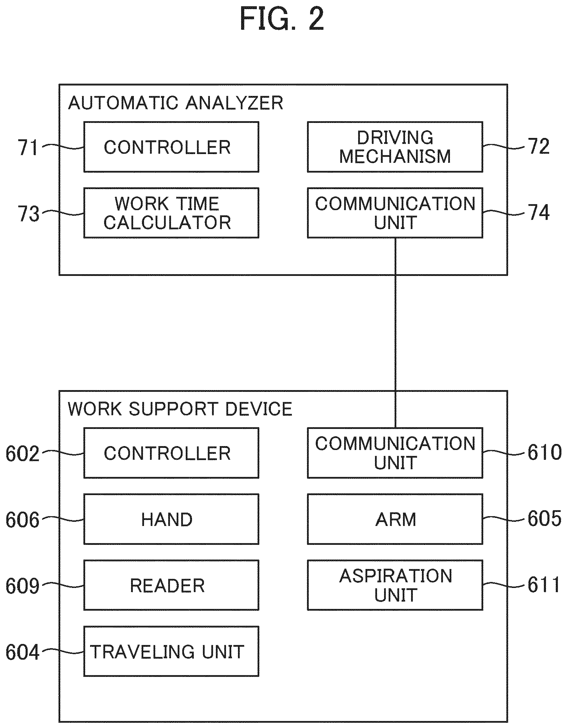

Fig. 2 is a functional block diagram of the automatic analysis system according to the present embodiment. In this case, the analyzer 1, the analyzer 2, the control device 3, and the specimen transport device 4 are defined as an automatic analyzer, and functions of the automatic analyzer are divided into a controller 71, a drive mechanism 72, a work time calculator 73, and a communication unit 74.

The drive mechanism 72 of the automatic analyzer includes the specimen dispensing mechanisms 105 and 205, the reagent dispensing mechanisms 106 and 206, a mechanism (Example 1 described below) that rotates the reaction disk, a mechanism (Example 2 described below) that moves the nozzle 115 in a vertical direction, a mechanism that locks and unlocks the lid 212 of the reagent cooler 204, and the like. In addition, the work time calculator 73 of the automatic analyzer calculates a work time to perform work of loading and/or unloading a storage member. The controller 71 of the automatic analyzer transmits an instruction signal to the work support device 6 based on the work time calculated by the work time calculator 73. The communication unit 74 of the automatic analyzer and the communication 610 of the work support device 6 may directly transmit and receive a signal to and from each other using near-field wireless communication or may transmit and receive a signal to and from each other via a router and a network.

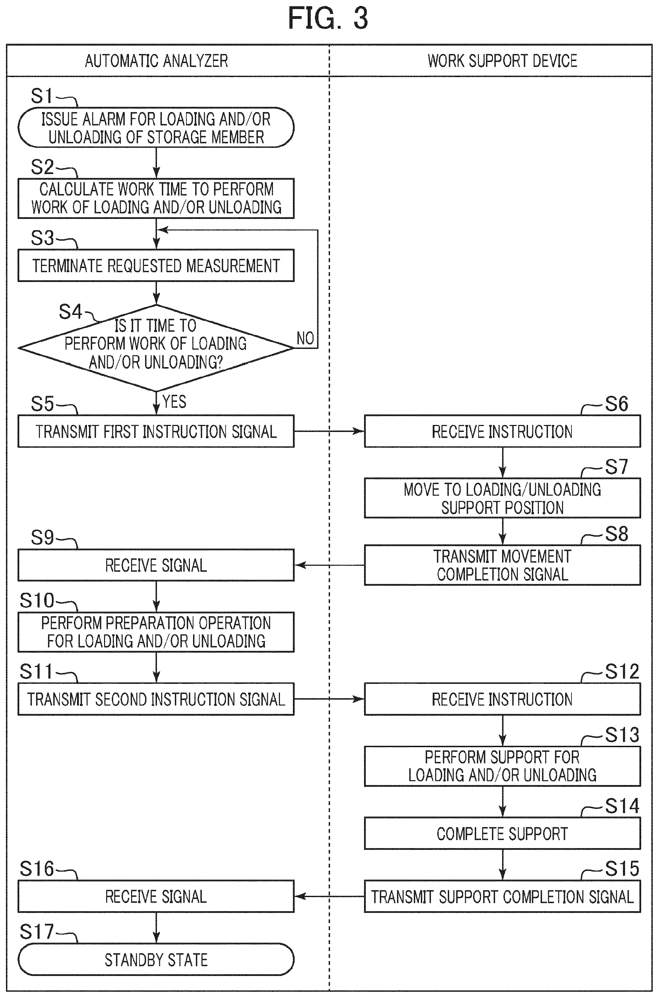

Fig. 3 is a flowchart illustrating a procedure for work regarding unloading or loading of a storage member in the automatic analysis system according to the present embodiment. First, the automatic analyzer issues an alarm to notify that it is almost time to load and/or unload the storage member based on information a remaining amount of a reagent or the like in the storage member, the time of the previous loading and/or unloading, and the like (step S1). Next, the work time calculator 73 of the automatic analyzer calculates a work time to perform work of loading and/or unloading the storage member based on the above-described remaining amount, the time of the previous loading and/or unloading, information of requested measurement (step S2). After that, when the requested measurement is terminated (step S3), the controller 71 of the automatic analyzer determines whether it is the loading and/or unloading work time calculated by the work time calculator 73 (step S4). When the controller 71 determines that it is not the loading and/or unloading work time, the procedure proceeds to the next measurement again. On the other hand, when the controller 71 determines that it is the loading and/or unloading work time, the procedure proceeds to work of loading and/or unloading the storage member, and the controller 71 transmits a first instruction signal to the work support device 6 via the communication unit 74 (step S5). Since the storage member is loaded and/or unloaded when the requested measurement operation is terminated, it is possible to suppress stopping the measurement operation in the middle of the measurement operation.

When the communication unit 610 of the work support device 6 receives the first instruction signal from the automatic analyzer (step S6), the controller 602 of the work support device 6 controls the traveling unit 604 to cause the traveling unit 604 to travel and move to a predetermined loading/unloading support position (step S7). When the movement to the loading/unloading support position is completed, the communication unit 610 of the work support device 6 transmits a movement completion signal to the automatic analyzer (step S8).

When the communication unit 74 of the automatic analyzer receives the movement completion signal from the work support device 6 (step S9), the controller 71 of the automatic analyzer controls the drive mechanism such that the storage member can be loaded and/or unloaded as a preparation operation for loading and/or unloading (step S10). When the preparation operation is completed, the communication unit 74 of the automatic analyzer transmits a second instruction signal to the work support device 6 (step S11).

When the communication unit 610 of the work support device receives the second instruction signal from the automatic analyzer (step S12), the controller 602 of the work support device 6 causes the arm 605 and the hand 606 to support the loading or unloading of the storage member (step S13). When the support for the loading or unloading of the storage member is completed (step S14), the communication unit 610 of the work support device 6 transmits a support completion signal to the automatic analyzer (step S15).

When the communication unit 74 of the automatic analyzer receives the support completion signal from the work support device 6 (step S16), the automatic analyzer goes into a standby state to wait for a next measurement operation (step S17).

Specific procedures for the loading and/or unloading of a storage member are described below using Examples 1 to 3.

### Example 1

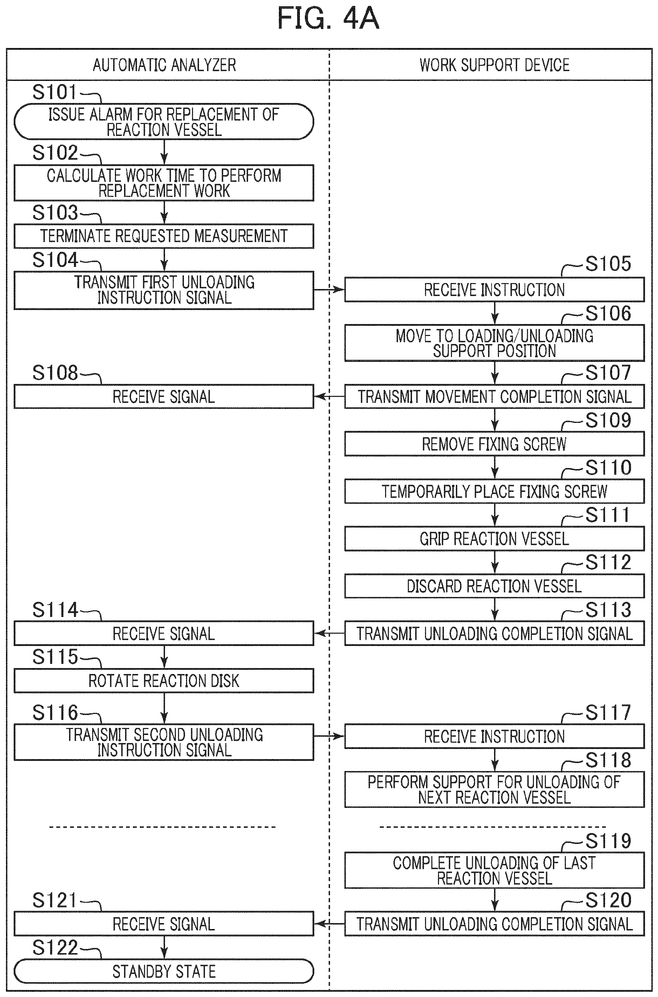

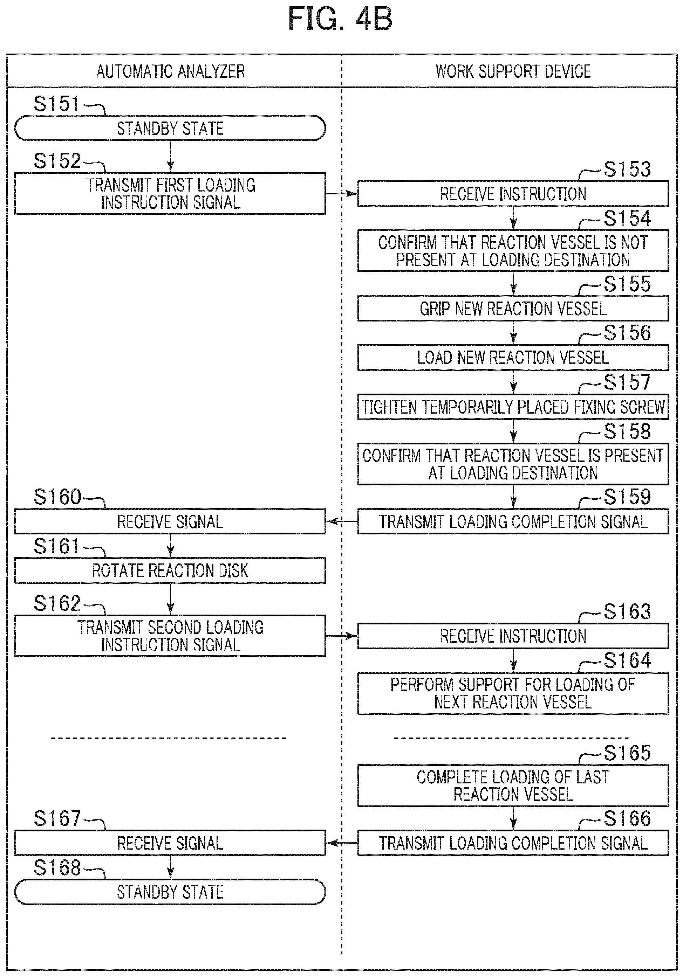

Example 1 is an example in which target storage members are a plurality of reaction vessels 201 on the circumference of the reaction disk 207. Fig. 4A is a flowchart illustrating operations of the automatic analyzer and the work support device 6 until all reaction vessels 201 to be discarded after being used are unloaded. Fig. 4B is a flowchart of operations of the automatic analyzer and the work support device 6 until all new reaction vessels 201 for replacement are loaded. When a plurality of reaction vessels 201 are arranged in a diameter direction of the reaction disk 207, a set of the plurality of reaction vessels 201 arranged in the diameter direction is a minimum unit to be loaded and/or unloaded.

In the present Example, while the automatic analyzer rotates the reaction disk 207, the work support device 6 sequentially unloads the plurality of reaction vessels 201 on the circumference of the reaction disk 207. After the unloading of all the reaction vessels is completed, while the automatic analyzer rotates the reaction disk 207 similarly, the work support device 6 sequentially loads new reaction vessels 201. A program for maintenance is installed in the automatic analyzer and the work support device 6 in advance, and the controllers of the devices are controlled based on the program.

As illustrated in Fig. 4A, first, the work time calculator 73 of the automatic analyzer calculates a replacement work day in advance based on information of a time for previous replacement of reaction vessels 201. When it is the replacement work day, the display unit 303 of the automatic analyzer issues an alarm (step S101). A method of issuing the alarm is not limited to displaying on the display unit 303 and may be another method of outputting audio or the like. Next, the work time calculator 73 calculates a time to terminate requested measurement or the like as a timing at which the measurement operation is not interrupted as much as possible (step S102). After that, when the requested measurement is terminated (step S103), the controller 71 of the automatic analyzer transmits a first unloading instruction signal to the work support device 6 via the communication unit 74 (step S104).

When the communication unit 610 of the work support device 6 receives the first unloading instruction signal from the automatic analyzer (step S105), the controller 602 of the work support device 6 controls the traveling unit 604 to cause the traveling unit 604 to travel and start to move toward a loading/unloading support position near the front of the reaction disk 207 of the automatic analyzer (step S106). In this case, the controller 602 of the work support device 6 analyzes an image captured by the camera 603 and calculates positions (distances and directions) of the reaction disk 207, the reaction vessel 201, the fixing screws 211, and the like to identify a location suitable for the unloading support work as the loading/unloading support position. When the movement to the loading/unloading support position is completed, the communication unit 610 of the work support device 6 transmits a movement completion signal to the automatic analyzer (step S107).

In addition, after extending the arm 211 toward a fixing screw 211, the controller 602 of the work support device 6 opens the hand 606 to cause the hand 606 to grip the fixing screw 211, rotates the hand 606 in a state in which the hand opening/closing detector 607 detects the gripping of the fixing screw 211, and removes the fixing screw 211 (step S109). Subsequently, after the controller 602 uses the hand opening/closing detector 607 to confirm the gripping of the fixing screw 211 and lifts up the arm 605, the controller 602 further moves the arm 605 to place the removed fixing screw 211 at a predetermined temporary placement location (step S110). The temporary placement location is confirmed using the camera 603 or the like. In addition, the temporary placement location may be the storage member holder 612 of the work support device 6.

Next, the controller 602 cancels the gripping by the hand 606 and uses the hand opening/closing detector 607 to confirm that the hand 606 is closed. After that, the controller 602 lifts up the arm 605 and moves the arm 605 toward the reaction vessel 201 targeted for unloading support. In addition, the controller 602 opens the hand 606 to cause the hand 606 to grip a gripping portion of the reaction vessel 201 (step S111), and lifts up the arm 605 in a state in which the hand opening/closing detector 607 detects the gripping of the reaction vessel 201. After that, the controller 602 controls the arm 605 to move the reaction vessel 201 to a predetermined discarding location such as the consumable storage unit 211 and opens the hand 606 to discard the reaction vessel 201 (step S112). Subsequently, after the controller 602 closes the hand 606 and uses the hand opening/closing detector 607 to confirm a closed state of the hand 606, the communication unit 610 transmits an unloading completion signal to the automatic analyzer (step S113). The discarding location is confirmed using the camera 603 or the like and may be the storage member holder 612.

When the communication unit 74 of the automatic analyzer receives the unloading completion signal (step S114), the controller 71 of the automatic analyzer rotates the reaction disk 207 by only one reaction vessel 201 as a preparation operation for unloading of the next reaction vessel 201 (step S115). When a position detector disposed on the reaction disk 207 detects that the reaction disk 207 rotated to a predetermined position, the communication unit 74 transmits a second unloading instruction signal to the work support device 6 (step S116).

When the communication unit 610 of the work support device 6 receives the second unloading instruction signal (step S117), the controller 602 of the work support device 6 supports unloading of the second reaction vessel 201 in the same manner as for the first reaction vessel 201 (step S118). After that, the same operation is repeated. In this case, the number of reaction vessels 201 on the reaction disk 207 is registered in advance in a storage unit (not illustrated) of the work support device 6. The controller 602 references the registered number to identify the number of times that the unloading support needs to be performed. Then, when the unloading of the last reaction vessel 201 on the reaction disk 207 is completed (step S119), the controller 602 uses the camera 603 or the like to confirm that a reaction vessel 201 is not present on the reaction disk 207. After that, the communication unit 610 transmits an unloading completion signal to the automatic analyzer (step S120).

When the communication unit 74 of the automatic analyzer receives the unloading completion signal (step S121), the automatic analyzer goes into the standby state (step S122). By temporarily going into the standby state before the next loading work, operator work such as cleaning a reaction tank can be performed at this timing.

Next, work of loading a new reaction vessel 201 is described with reference to Fig. 4B. First, the controller 71 of the automatic analyzer transmits a first loading instruction signal to the work support device 6 via the communication unit 74 (step S152).

When the communication unit 610 of the work support device 6 receives the first loading instruction signal from the automatic analyzer (step S153), the controller 602 of the work support device 6 uses the camera 603 or the like to confirm that a reaction vessel 201 is not present on the reaction disk 207 that is a loading destination (step S154). After that, the controller 602 moves the arm 605 toward the new reaction vessel 201 prepared at a predetermined preparation location in advance and targeted for loading support, and opens the hand 606 to cause the hand 606 to grip a gripping portion of the reaction vessel 201 (step S155). When the preparation location where the new reaction vessel 201 is prepared is far from the loading/unloading support position, the work support device 6 travels by the traveling unit 604 as necessary. In addition, the preparation location may be the storage member holder 612 of the work support device 6.

Subsequently, the controller 602 lifts up the arm 605 to move the reaction vessel 201 to the loading destination on the reaction disk 207 in a state in which the hand opening/closing detector 607 detects the gripping of the reaction vessel 201, and opens the hand 606 to load the reaction vessel 201 (step S156). In addition, after the controller 602 closes the hand 606 and uses the hand opening/closing detector 607 to confirm the closed state of the hand 606, the controller 602 lifts up the arm 605 to move the arm 605 to the temporary placement location where the fixing screw 211 is placed at the time of the unloading support. After that, the controller 602 opens the hand 606 to cause the hand 606 to grip the fixing screw 211, and lifts up the arm 605 in a state in which the hand opening/closing detector 607 detects the gripping by the hand 606. The controller 602 uses the camera 603 or the like to confirm the loading destination of the reaction vessel 201 and a fixed position of the fixing screw 211. After that, the controller 602 uses the arm 605 to insert the fixing screw 211 in a fixed position on the reaction disk 207, and rotates the hand 606 to tighten the fixing screw 211 (step S157). Next, the controller 602 cancels the gripping by the hand 606, uses the hand opening/closing detector 607 to confirm that the fixing screw 211 is not gripped. After that, the controller 602 lifts up the arm 605 and confirms that the reaction vessel 201 is present at the loading destination (step S158). After that, the communication unit 610 transmits a loading completion signal regarding the first reaction vessel 201 to the automatic analyzer (step S159).

When the communication unit 74 of the automatic analyzer receives the loading completion signal (step S160), the controller 71 of the automatic analyzer rotates the reaction disk 207 by one reaction vessel 201 as a preparation operation for loading of the next reaction vessel 201 (step S161). When the position detector disposed on the reaction disk 207 detects that the reaction disk 207 rotated to a predetermined position, the communication unit 74 transmits a second loading instruction signal to the work support device 6 (step S162).

When the communication unit 610 of the work support device 6 receives the second loading instruction signal (step S163), the controller 602 of the work support device 6 supports loading of the second reaction vessel 201 in the same manner as for the first reaction vessel 201 (step S164). After that, the same operation is repeated. Then, when the loading of the last reaction vessel 201 on the reaction disk 207 is completed (step S165), the communication unit 610 transmits a loading completion signal to the automatic analyzer (step S166).

When the communication unit 74 of the automatic analyzer receives the loading completion signal (step S167), the automatic analyzer goes into the standby state (step S168).

As described above, according the present Example, the automatic analyzer and the work support device 6 coordinate with each other so as to be able to automatically perform work of replacing a reaction vessel 201 and reduce manual work by the operator. Particularly, a reaction vessel 201 present on the back side (rear side) of the reaction disk 207 may be far from the operator and it may be difficult to replace the reaction vessel 201 present on the back side (backward side) of the reaction disk 207. However, in the present Example, the automatic analyzer rotates the reaction disk 207 and thus the work support device 6 can support loading and/or unloading of a reaction vessel at the same position on the front side (forward side) of the reaction disk 207. Therefore, the work support device 6 may not need to travel by the traveling unit 604 and to further extend the arm 605 and thus it is possible to reduce a time period required for replacement of a reaction vessel 201. In addition, in the present Example, a new reaction vessel 201 is not loaded immediately after a single reaction vessel 201 is unloaded, and new reaction vessels 201 are collectively loaded after all reaction vessels 201 are unloaded. Therefore, loading and/or unloading work is more efficient as a whole.

### Example 2

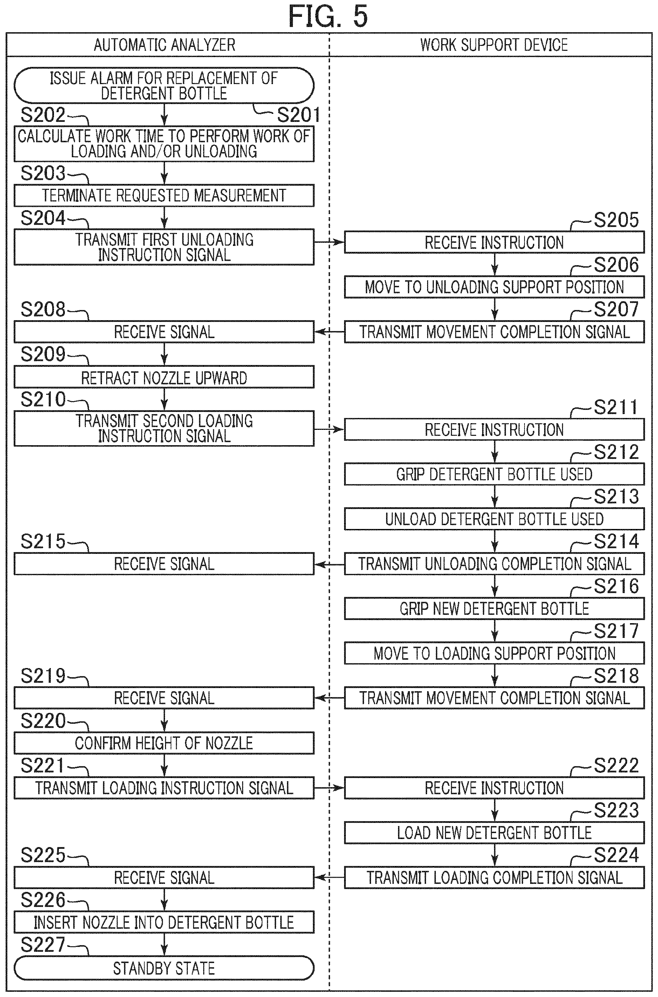

Example 2 is an example in which a target storage member is a detergent bottle 113. Fig. 5 is a flowchart illustrating operations of the automatic analyzer and the work support device 6 according to the present Example.

As illustrated in Fig. 5, first, when the weight sensor 117 or the like detects that a remaining amount in the detergent bottle 113 is smaller than a defined value set in advance, the automatic analyzer issues an alarm for replacement of the detergent bottle 113 (step S201). Next, the work time calculator 73 of the automatic analyzer calculates a work time to perform work of replacing the detergent bottle 113 based on the above-described remaining amount and information of requested measurement (step S202). After that, when it is the time to perform the replacement work at a time when the requested measurement is terminated, the controller 71 of the automatic analyzer shifts to the work of replacing the detergent bottle 113 (step S203) and transmits a first loading instruction signal to the work support device 6 via the communication unit 74 (step S204).

When the communication unit 610 of the work support device 6 receives the first loading instruction signal from the automatic analyzer (step S205), the controller 602 of the work support device 6 controls the traveling unit 604 to causes the traveling unit 604 to travel and start to move toward a loading/unloading support position near the front of the detergent bottle 113 of the automatic analyzer (step S206). When the movement to the loading/unloading support position is completed, the communication unit 610 transmits a movement completion signal to the automatic analyzer (step S207).

When the communication unit 74 of the automatic analyzer receives the movement completion signal from the work support device 6 (step S208), the controller 71 of the automatic analyzer controls the drive mechanism to retract the nozzle 115 upward as a preparation operation for unloading (step S209). After that, the controller 71 uses the nozzle detector 116 to confirm the height of the nozzle 115 and the communication unit 74 transmits a second unloading instruction signal to the work support device 6 (step S210).

When the communication unit 610 of the work support device 6 receives the second unloading instruction signal from the automatic analyzer (step S211), the controller 602 of the work support device 6 uses the camera 603 to confirm the position of the detergent bottle 113. After that, the controller 602 extends the arm 605 toward the detergent bottle 113, opens the hand 606 to cause the hand 606 to grip a gripping portion of the detergent bottle (step S212). Subsequently, the controller 602 moves the arm 605 toward the front side in a state in which the hand opening/closing detector 607 detects the gripping of the detergent bottle 113, and removes the detergent bottle 113. In addition, the controller 602 controls the traveling unit 604 and the arm 605 to unload the detergent bottle 113 to a predetermined discarding location (step S213) and opens the hand 606 to discard the detergent bottle 113. After that, after the controller 602 closes the hand 606 and uses the hand opening/closing detector 607 to confirm the closed state of the hand 606, the communication unit 610 transmits an unloading completion signal to the automatic analyzer (step S214).

In addition, after traveling by the traveling unit 604 as necessary, the controller 602 moves the arm toward a new detergent bottle 113 prepared at a predetermined preparation location and targeted for loading support and opens the hand 606 to cause the hand 606 to grip the gripping portion of the detergent bottle 113 (step S216). After that, the controller 602 controls the traveling unit 604 to causes the traveling unit 604 to start to move toward the loading/unloading support position (step S217). When the movement to the loading/unloading support position is completed, the communication unit 610 transmits a movement completion signal to the automatic analyzer (step S218).

When the communication unit 74 of the automatic analyzer receives the movement completion signal from the work support device 6 (step S219), the controller 71 of the automatic analyzer uses the nozzle detector 116 to confirm that the distal end of the nozzle 115 is located higher than the upper end of the detergent bottle 113 (step S220). After that, the communication unit 74 transmits a loading instruction signal to the work support device 6 (step S221).

When the communication unit 610 of the work support device 6 receives the loading instruction signal from the automatic analyzer (step S222), the controller 602 of the work support device 6 uses the camera 603 to confirm the position of a loading destination of the detergent bottle 113. The controller 602 controls the arm 605 to move the arm 605 toward the loading destination in a state in which the hand opening/closing detector 607 detects the gripping of the detergent bottle 113. In addition, the controller 602 opens the hand 606 to load the detergent bottle 113 (step S223). Next, the controller 602 uses the hand opening/closing detector 607 to confirm that the detergent bottle 113 is not gripped. The controller 602 uses the camera 603 and the weight sensor 117 to confirm that the detergent bottle 113 is present at the loading destination. After that, the communication unit 610 transmits a loading completion signal to the automatic analyzer (step S224).

When the communication unit 74 of the automatic analyzer 74 receives the loading completion signal (step S225), the controller 71 of the automatic analyzer lowers the nozzle 115 to insert the nozzle 115 into the detergent bottle 113 (step S226). After the controller 71 uses the nozzle detector 116 to confirm that the distal end of the nozzle 115 is located at a height position where the distal end is immersed in the liquid surface of a detergent, the automatic analyzer goes into the standby state (step S227).

As described above, in the present Example, after retracting the nozzle 115 upward as a preparation operation for work of replacing the detergent bottle 113, the automatic analyzer outputs an instruction signal for work support to the work support device. As a result, it is possible to automatically perform work of replacing the detergent bottle 113 that is a consumable without interference with the nozzle 115 and it is possible to reduce manual work by the operator. In the present Example, the discarding location where a detergent bottle 113 used is discarded and a preparation location where a new detergent bottle 113 is prepared can be the storage member holder 612 of the work support device 6 and it is possible to save a time period required to move the traveling unit 604 and the arm 605.

In addition, the work support device 6 according to the present Example can use the reader 609 to read information of the type, manufacturing date, expiration date, and the like of a detergent in a new detergent bottle 113 from a barcode or the like attached to the surface of the new detergent bottle 113. Therefore, according to the present Example, the work support device 6 can select a detergent bottle 113 with the most recent expiration date from among a plurality of detergent bottles 113 present at the preparation location and perform support for loading.

### Example 3

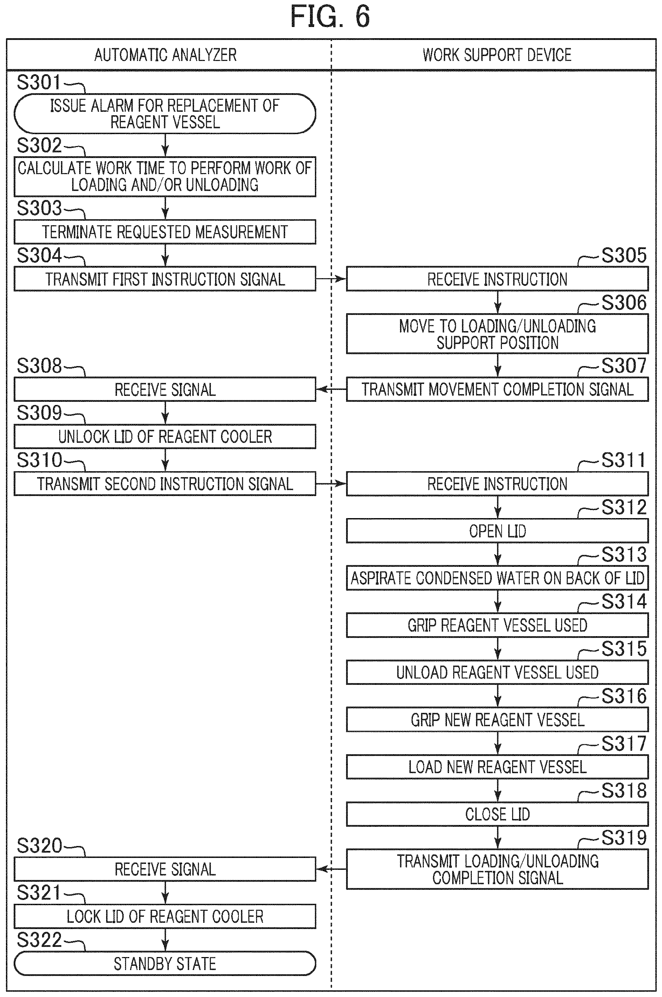

Example 3 is an example in which a target storage member is a reagent vessel 203. Fig. 6 is a flowchart illustrating operations of the automatic analyzer and the work support device 6 in the present Example.

As illustrated in Fig. 6, first, when a remaining amount in the reagent vessel 203 is smaller than a defined value set in advance, the automatic analyzer issues an alarm for replacement of the reagent vessel 203 (step S301). Next, the work time calculator 73 of the automatic analyzer calculates a work time to perform work of replacing the reagent vessel 203 based on the above-described remaining amount and information of requested measurement (step S302). After that, when it is the time to perform the replacement work at a time when the requested measurement is terminated, the controller 71 of the automatic analyzer shifts to the work of replacing the reagent vessel 203 (step S303) and transmits a first instruction signal to the work support device 6 via the communication unit 74 (step S304).

When the communication unit 610 of the work support device 6 receives the first instruction signal from the automatic analyzer (step S305), the controller 602 of the work support device 6 controls the traveling unit 604 to cause the traveling unit 604 to travel and start to move toward a loading/unloading support position near the front of the reagent cooler 204 of the automatic analyzer (step S306). When the movement to the loading/unloading support position is completed, the communication unit 610 transmits a movement completion signal to the automatic analyzer (step S307).

When the communication unit 74 of the automatic analyzer receives the movement completion signal from the work support device 6 (step S308), the controller 71 of the automatic analyzer controls the drive mechanism to unlock the lid 212 of the reagent cooler 204 as a preparation operation for unloading (step S309). After that, the controller 71 uses the nozzle detector 116 to confirm the height of the nozzle 115. Then, the communication unit 74 transmits a second instruction signal to the work support device 6 (step S310).

When the communication unit 610 of the work support device 6 receives the second instruction signal from the automatic analyzer (step S311), the controller 602 of the work support device 6 uses the camera 603 to confirm the position of the lid 212 of the reagent cooler 204. After that, the controller 602 controls the arm 605 and the hand 606 to cause the arm 605 and the hand 606 to grip and lift up a gripping portion of the lid 212 and move the lid 212 to a location separate from the reagent cooler 204 (step S312). Subsequently, the controller 602 controls the aspiration unit 611 to aspirate condensed water adhering to the back surface of the lid 212 (step S313). Next, the controller 602 uses the camera 603 to confirm the position of the reagent vessel 203 present on the reagent disk and targeted for unloading support. After that, the controller 602 controls the arm 605 and the hand 606 to cause the hand 606 to grip the gripping portion of the reagent vessel 203 (step S314). In addition, the controller 602 causes the traveling unit 604 to move to a predetermined discarding position and causes the arm 605 and the hand 606 to discard the reagent vessel 203 used (step S315).

After that, the controller 602 causes the traveling unit 604 to travel and causes the hand 606 to grip a gripping portion of a new reagent vessel 203 prepared at a predetermined preparation location and targeted for loading support as necessary (step S316). In addition, the controller 602 controls the traveling unit 604 to cause the traveling unit 604 to move to the loading/unloading support position and controls the arm 605 and the handle 606 to load the new reagent vessel 203 onto the reagent disk (step S317). Subsequently, the controller 602 causes the arm 605 and the hand 606 to attach the lid 212 to the upper opening portion of the reagent cooler 204 (step S318). Then, the communication unit 610 transmits an loading/unloading completion signal to the automatic analyzer (step S319). When a plurality of reagent vessels 203 to be replaced are present, the lid 212 is attached and a loading/unloading completion signal is transmitted by the same operation after completion of replacement of all the reagent vessels 203.

When the communication unit 74 of the automatic analyzer receives the loading/unloading completion signal from the work support device 6 (step S320), the controller 71 of the automatic analyzer locks the lid 212 of the reagent cooler 204 (step S321) and the automatic analyzer goes into the standby state (step S322).

As described above, in the present Example, the automatic analyzer unlocks the lid 212 of the reagent cooler 204 as a preparation operation for work of replacing a reagent vessel 203 and then outputs an instruction for work support to the work support device. As a result, it is possible to automatically perform work of replacing the reagent vessel 203 that is a consumable and to reduce manual work by the operator.

In addition, in a case where the work support device 6 supports loading and/or unloading, the automatic analyzer can efficiently perform work of loading and/or unloading when the reagent disk is rotated such that a reagent vessel 203 to be replaced is located on the front side (forward side) of the reagent cooler 204. In addition, the automatic analyzer may include a mechanism that can unlock the lid 212 and open and close the lid 212.

Even in the present Example, a location where a reagent vessel 203 used is discarded and a location where a new reagent vessel 203 is prepared may be the storage member holder 612 of the work support device 6, and the hand opening/closing detector 607 may confirm whether a reagent vessel 203 and the lid 212 are gripped. In addition, instead of aspirating condensed water on the back surface of the lid 212 of the reagent cooler 204, the lid 212 may be continuously kept horizontal while being confirmed with the camera 603 to prevent condensed water from gathering and falling.

Each of Examples are described above in detail to clearly explain the present invention and are not necessarily limited to the examples including all the configurations described. In addition, a configuration of a certain Example can be added to a configuration of another Example. Furthermore, regarding a part of the configurations of Examples, it is possible to add, remove, and replace another configuration. For example, in Examples 1 to 3 described above, the examples of the work of replacing a reagent vessel, a detergent bottle, and a reagent vessel as storage members are described, but work regarding loading and collecting a specimen vessel as a storage member may be performed.

### List of Reference Signs

1: Automatic analyzer, 103: Reagent vessel, 104: Reagent cooler, 105: Specimen dispensing mechanism, 106: Reagent dispensing mechanism, 107: Reaction acceleration unit, 108: Measurement unit, 110: Specimen aspiration device, 111: Consumable storage unit, 112: Consumable transport unit, 113: Detergent bottle, 114: Flow path, 115: Nozzle, 116: Nozzle detector, 117: Weight sensor, 118: Liquid surface detector, 2: Automatic analyzer, 203: Reagent vessel, 204: Reagent cooler, 205: Specimen dispensing mechanism, 206: Reagent dispensing mechanism, 207: Reaction disk, 208: Measurement unit, 210: Specimen aspiration device, 211: Fixing screw, 212: Lid, 3: Control device, 301: Controller, 302: Communication unit, 303: Display unit, 4: Specimen transport device, 5: Specimen vessel, 6: Work support device, 601: Body, 602: Controller, 603: Camera, 604: Traveling unit, 605: Arm, 606: Hand, 607: Hand opening/closing detector, 608: Obstacle sensor, 609: Reader, 610: Communication unit, 611: Aspiration unit, 612: Storage member holder, 71: Controller, 72: Drive mechanism, 73: Work time calculator, 74: Communication unit

## Claims

1. An automatic analyzer (1, 2) comprising:
a drive mechanism (72) adapted to be driven to use a specimen or reagent stored in a storage member;
an automatic analyzer controller (71) adapted to control the drive mechanism; a reagent cooler; and
an automatic analyzer communication unit (74) adapted to communicate with a work support device (6) performing work support to support work of loading and/or unloading the storage member and comprising a work support device communication unit (610) for communicating with the automatic analyzer, a traveling unit (604) for traveling to a location different from the automatic analyzer according to a type of the storage member, a hand (606) for gripping and releasing the storage member, an arm (605) for moving the hand to a predetermined position, an aspiration unit (611) for aspirating condensed water on a back surface of a lid of a reagent cooler of the automatic analyzer, and a work support device controller (602) for controlling the work support device communication unit, the traveling unit, the hand, the arm, and the aspiration unit; wherein
the automatic analyzer communication unit is adapted to transmit a first instruction signal for first work support to the work support device;
when the automatic analyzer communication unit receives a movement completion signal for the first work support from the work support device after the traveling unit has completed the movement to the predetermined position and the work support device communication unit has transmitted the movement completion signal to the automatic analyzer, the automatic analyzer controller is adapted to automatically control the drive mechanism to perform a preparation operation for the loading and/or unloading and to control the automatic analyzer communication unit to automatically transmit a second instruction signal for second work support of loading and/or unloading the storage member to the work support device, wherein the second instruction signal causes the work support device controller to control the aspiration unit to aspirate condensed water adhering to the back surface of the lid.

2. The automatic analyzer according to claim 1, wherein
the work support device (6) is a self-propelled robot that adapted to be autonomously driven to perform the work support,
when the automatic analyzer communication unit (74) transmits the first instruction signal to the work support device and receives the movement completion signal transmitted by the work support device when the work support device has traveled and completed moving to the predetermined position, the automatic analyzer controller (71) is adapted to control the drive mechanism (72) so that the storage member can be loaded and/or unloaded, and to control the automatic analyzer communication unit to transmit the second instruction signal to the work support device.

3. The automatic analyzer according to claim 1, wherein
the storage member is a plurality of reaction vessels (201) that store a reaction solution in which the specimen and the reagent are mixed, and are arranged on a circumference of a reaction disk (207),
the drive mechanism (72) is adapted to rotate the reaction disk, and
when the automatic analyzer communication unit (74) receives the movement completion signal from the work support device (6) after the work support device performs support for replacement of a reaction vessel when the reaction vessel to be replaced is located at a predetermined position, the automatic analyzer controller (71) is adapted to control the drive mechanism to rotate the reaction disk such that the reaction vessel to be replaced next is located at the predetermined position, and to control the automatic analyzer communication unit to transmit the second instruction signal to the work support device after the rotation of the reaction disk.

4. The automatic analyzer according to claim 2, wherein
the storage member is a detergent bottle (113) storing a detergent that is a system reagent,
the drive mechanism (72) is adapted to move a nozzle (115) in a vertical direction, the nozzle being configured to aspirate the detergent from the detergent bottle,
when the drive mechanism retracts the nozzle upward, the automatic analyzer communication unit (74) is adapted to transmit the second instruction signal to the work support device (6), and
when the automatic analyzer communication unit receives the movement completion signal from the work support device after support for replacement of the detergent bottle is performed by the work support device, the automatic analyzer controller (71) is adapted to control the drive mechanism to insert the nozzle into the detergent bottle.

5. The automatic analyzer according to claim 2, wherein
the storage member is a plurality of reagent vessels (203) that store a reagent and are arranged on a circumference of a reagent disk in a reagent cooler (204),
the drive mechanism (72) is configured to unlock a lid (212) of the reagent cooler,
when the drive mechanism unlocks the lid, the automatic analyzer communication unit (74) is adapted to transmit the second instruction signal to the work support device (6), and
after support for replacement of the reagent vessels is performed by the work support device, the automatic analyzer communication unit is adapted to receive the movement completion signal from the work support device.

6. The automatic analyzer according to claim 1, further comprising a work time calculator (73) for calculating a work time to load and/or unload the storage member, wherein
the automatic analyzer communication unit (74) is adapted to transmit an instruction signal for the first work support to the work support device (6) based on the work time calculated by the work time calculator.

7. A work support device (6) for performing work support to support work of loading and/or unloading a storage member that is used in an automatic analyzer comprising a drive mechanism (72) adapted to be driven to use a specimen or reagent stored in the storage member, an automatic analyzer controller (71) adapted to control the drive mechanism, and an automatic analyzer communication unit (74) adapted to communicate with the work support device, wherein the work support device comprises:
a work support device communication unit (610) adapted to communicate with the automatic analyzer;
a traveling unit (604) adapted to travel to a location different from the automatic analyzer according to a type of the storage member;
a hand (606) adapted to grip and release the storage member;
an arm (605) adapted to move the hand to a predetermined position;
an aspiration unit (611) adapted to aspirate condensed water on a back surface of a lid of a reagent cooler of the automatic analyzer; and
a work support device controller (602) adapted to control the work support device communication unit, the traveling unit, the hand, the arm, and the aspiration unit, wherein
when the work support device communication unit receives a first instruction signal from the automatic analyzer, the work support device controller is adapted to cause the traveling unit to complete the movement to the predetermined position and to cause the automatic analyzer communication unit to transmit a movement completion signal to the automatic analyzer after the completion of the movement, and
when the work support device communication unit receives a second instruction signal from the automatic analyzer after the drive mechanism has automatically performed a preparation operation for loading and/or unloading and the automatic analyzer communication unit has automatically transmitted the second instruction signal to the work support device, the work support device controller is adapted to cause the arm and the hand to support loading or unloading of the storage member.

8. The work support device according to claim 7, further comprising a reader (609) adapted to read identification information given to the storage member, wherein
the work support device controller (602) is adapted to support loading of the predetermined storage member among a plurality of the storage members based on the identification information.

9. The work support device according to claim 7, wherein
the work support device includes a storage member holder (612) adapted to hold the storage member to be newly loaded to the automatic analyzer or the storage member to be unloaded for discarding.

10. The work support device according to claim 9, further comprising a reader (612) that identification information given to the storage member, wherein
the work support device controller (602) is adapted to support, based on the identification information, loading of the storage member with the most recent expiration date among a plurality of the storage members in the storage member holder.

11. An automatic analysis system comprising:
the automatic analyzer (1) according to claim 1; and
the work support device (6) according to claim 7, adapted to communicate with the automatic analyzer to perform work support to support work of loading and/or unloading of a storage member that is used in the automatic analyzer, wherein
the automatic analyzer communication unit is adapted to transmit a first instruction signal for first work support to the work support device;
when the work support device communication unit receives the first instruction signal from the automatic analyzer, the work support device controller is adapted to cause the traveling unit to complete the movement to the predetermined position and to cause the automatic analyzer communication unit to transmit a movement completion signal to the automatic analyzer after the completion of the movement;
when the automatic analyzer communication unit receives the movement completion signal for the first work support from the work support device after the traveling unit has completed the movement to the predetermined position and the work support device communication unit has transmitted the movement completion signal to the automatic analyzer, the automatic analyzer controller is adapted to automatically control the drive mechanism to perform a preparation operation for the loading and/or unloading and to control the automatic analyzer communication unit to automatically transmit a second instruction signal for second work support of loading and/or unloading the storage member to the work support device; and
when the work support device communication unit receives the second instruction signal from the automatic analyzer after the drive mechanism has automatically performed a preparation operation for loading and/or unloading and the automatic analyzer communication unit has automatically transmitted the second instruction signal to the work support device, the work support device controller is adapted to cause the arm and the hand to support loading or unloading of the storage member.

## Patentansprüche

1. Automatische Analysevorrichtung (1, 2), umfassend:
einen Antriebsmechanismus (72), der dazu ausgelegt ist, angetrieben zu werden, um eine Probe oder ein Reagens zu verwenden, die in einem Speicherelement gespeichert sind;
eine Steuerung (71) für die automatische Analysevorrichtung, die dazu ausgelegt ist, den Antriebsmechanismus zu steuern;
eine Reagenskühlungseinrichtung; und
eine Kommunikationseinheit (74) für die automatische Analysevorrichtung, die dazu ausgelegt ist, mit einer Arbeitsunterstützungsvor-richtung (6) zu kommunizieren, die Arbeitsunterstützung durchführt, um die Arbeit des Ladens und/oder Entladens des Speicherelements zu unterstützen, und die eine Arbeitsunterstützungsvorrichtungs-Kommunikationseinheit (610) zur Kommunikation mit der automatischen Analysevorrichtung, eine Fortbewegungseinheit (604) zum Fortbewegen zu einem von der automatischen Analysevorrichtung verschiedenen Ort gemäß einem Typ des Speicherelements, eine Hand (606) zum Greifen und Freigeben des Speicherelements, einen Arm (605) zum Bewegen der Hand zu einer vorbestimmten Position, eine Aspirationseinheit (611) zum Aspirieren von Kondenswasser auf einer Rückseite eines Deckels einer Reagenskühlungseinrichtung der automatischen Analysevorrichtung und eine Arbeitsunterstützungsvorrichtungs-Steuerung (602) zum Steuern der Arbeitsunterstützungsvorrichtungs-Kommunikationseinheit, der Fortbewegungseinheit, der Hand, des Arms und der Aspirationseinheit umfasst;
wobei
die Kommunikationseinheit für die automatische Analysevorrichtung dazu ausgelegt ist, ein erstes Anweisungssignal für erste Arbeitsunterstützung an die Arbeitsunterstützungsvorrichtung zu übertragen;
wenn die Kommunikationseinheit für die automatische Analysevorrichtung ein Bewegungsbeendigungssignal für die erste Arbeitsunterstützung von der Arbeitsunterstützungsvorrichtung empfängt, nachdem die Fortbewegungseinheit die Fortbewegung zur vorbestimmten Position beendet hat und die Arbeitsunterstützungsvorrichtungs-Kommunikationseinheit das Bewegungsbeendigungssignal an die automatische Analysevorrichtung übertragen hat, die Steuerung für die automatische Analysevorrichtung dazu ausgelegt ist, den Antriebsmechanismus automatisch dahingehend zu steuern, einen Vorbereitungsvorgang für das Laden und/oder Entladen durchzuführen, und die Kommunikationseinheit für die automatische Analysevorrichtung dahingehend zu steuern, automatisch ein zweites Anweisungssignal für zweite Arbeitsunterstützung zum Laden und/oder Entladen des Speicherelements an die Arbeitsunterstützungsvorrichtung zu übertragen, wobei das zweite Anweisungssignal die Arbeitsunterstützungsvorrichtungs-Steuerung veranlasst, die Aspirationseinheit dahingehend zu steuern, Kondenswasser zu aspirieren, das an der Rückseite des Deckels haftet.

2. Automatische Analysevorrichtung nach Anspruch 1, wobei
die Arbeitsunterstützungsvorrichtung (6) ein selbstfahrender Roboter ist, der dazu ausgelegt ist, autonom angetrieben zu werden, um die Arbeitsunterstützung durchzuführen,
wenn die Kommunikationseinheit (74) für die automatische Analysevorrichtung das erste Anweisungssignal an die Arbeitsunterstützungsvorrichtung überträgt und das Bewegungsbeendigungssignal empfängt, das von der Arbeitsunterstützungsvorrichtung übertragen wird, wenn sich die Arbeitsunterstützungsvorrichtung fortbewegt hat und die Bewegung zur vorbestimmten Position beendet hat, die Steuerung (71) für die automatische Analysevorrichtung dazu ausgelegt, den Antriebsmechanismus (72) so zu steuern, dass das Speicherelement beladen und/oder entladen werden kann, und die Kommunikationseinheit für die automatische Analysevorrichtung dahingehend zu steuern, das zweite Anweisungssignal an die Arbeitsunterstützungsvorrichtung zu übertragen.

3. Automatische Analysevorrichtung nach Anspruch 1, wobei
das Speicherelement eine Mehrzahl von Reaktionsgefäßen (201) ist, die eine Reaktionslösung speichern, in der die Probe und das Reagens gemischt sind, und die auf einem Umfang einer Reaktionsscheibe (207) angeordnet sind,
der Antriebsmechanismus (72) dazu ausgelegt ist, die Reaktionsscheibe zu drehen, und
wenn die Kommunikationseinheit (74) für die automatische Analysevorrichtung das Bewegungsbeendigungssignal von der Arbeitsunterstützungsvor-richtung (6) empfängt, nachdem die Arbeitsunterstützungsvorrichtung Unterstützung für den Austausch eines Reaktionsgefäßes durchführt, wenn sich das auszutauschende Reaktionsgefäß an einer vorbestimmten Position befindet, die Steuerung (71) für die automatische Analysevorrichtung dazu ausgelegt ist, den Antriebsmechanismus dahingehend zu steuern, die Reaktionsscheibe so zu drehen, dass sich das als nächstes auszutauschende Reaktionsgefäß an der vorbestimmten Position befindet, und die Kommunikationseinheit für die automatische Analysevorrichtung dahingehend zu steuern, das zweite Anweisungssignal an die Arbeitsunterstützungsvorrichtung nach der Drehung der Reaktionsscheibe zu übertragen.

4. Automatische Analysevorrichtung nach Anspruch 2, wobei
das Speicherelement eine Reinigungsmittelflasche (113) ist, die ein Reinigungsmittel speichert, das ein Systemreagens ist,
der Antriebsmechanismus (72) dazu ausgelegt ist, eine Düse (115) in einer vertikalen Richtung zu bewegen, wobei die Düse dazu eingerichtet ist, das Reinigungsmittel aus der Reinigungsmittelflasche zu aspirieren,
wenn der Antriebsmechanismus die Düse nach oben zurückzieht, die Kommunikationseinheit (74) für die automatische Analysevorrichtung dazu ausgelegt ist, das zweite Anweisungssignal an die Arbeitsunterstützungsvorrichtung (6) zu übertragen, und
wenn die Kommunikationseinheit für die automatische Analysevorrichtung das Bewegungsbeendigungssignal von der Arbeitsunterstützungsvorrichtung empfängt, nachdem die Unterstützung für den Austausch der Reinigungsmittelflasche von der Arbeitsunterstützungsvorrichtung durchgeführt wird, die Steuerung (71) für die automatische Analysevorrichtung dazu ausgelegt ist, den Antriebsmechanismus dahingehend zu steuern, die Düse in die Reinigungsmittelflasche einzuführen.

5. Automatische Analysevorrichtung nach Anspruch 2, wobei
das Speicherelement eine Vielzahl von Reagensgefäßen (203) ist, die ein Reagens speichern und auf einem Umfang einer Reagensscheibe in einer Reagenskühlungseinrichtung (204) angeordnet sind,
der Antriebsmechanismus (72) dazu eingerichtet ist, einen Deckel (212) des Reagenskühlungseinrichtung zu entriegeln,
wenn der Antriebsmechanismus den Deckel entriegelt, die Kommunikationseinheit (74) für die automatische Analysevorrichtung dazu ausgelegt ist, das zweite Anweisungssignal an die Arbeitsunterstützungsvorrichtung (6) zu übertragen, und
nachdem die Unterstützung für den Austausch der Reagensgefäße von der Arbeitsunterstützungsvorrichtung durchgeführt wird, die Kommunikationseinheit für die automatische Analysevorrichtung dazu ausgelegt ist, das Bewegungsbeendigungssignal von der Arbeitsunterstützungsvorrichtung zu empfangen.

6. Automatische Analysevorrichtung nach Anspruch 1, ferner umfassend einen Arbeitszeitberechnungseinrichtung (73) zum Berechnen einer Arbeitszeit zum Laden und/oder Entladen des Speicherelements, wobei
die Kommunikationseinheit (74) für die automatische Analysevorrichtung dazu ausgelegt ist, ein Anweisungssignal für die erste Arbeitsunterstützung an die Arbeitsunterstützungsvorrichtung (6) basierend auf der durch die Arbeitszeitberechnungseinrichtung berechneten Arbeitszeit zu übertragen.

7. Arbeitsunterstützungsvorrichtung (6) zum Durchführen von Arbeitsunterstützung, um die Arbeit des Ladens und/oder Entladens eines Speicherelements zu unterstützen, das in einer automatischen Analysevorrichtung verwendet wird, die einen Antriebsmechanismus (72), der dazu ausgelegt ist, angetrieben zu werden, um eine Probe oder ein Reagens zu verwenden, die in dem Speicherelement gespeichert sind, eine Steuerung (71) für die automatische Analysevorrichtung, die dazu ausgelegt ist, den Antriebsmechanismus zu steuern, und eine Kommunikationseinheit (74) für die automatische Analysevorrichtung, die dazu ausgelegt ist, mit der Arbeitsunterstützungsvorrichtung zu kommunizieren, umfasst, wobei die Arbeitsunterstützungsvorrichtung umfasst:
eine Arbeitsunterstützungsvorrichtungs-Kommunikationseinheit (610), die dazu ausgelegt ist, mit der automatischen Analysevorrichtung zu kommunizieren;
eine Fortbewegungseinheit (604), die dazu ausgelegt ist, sich zu einem von der automatischen Analysevorrichtung verschiedenen Ort gemäß einem Typ des Speicherelements fortzubewegen;
eine Hand (606), die dazu ausgelegt ist, das Speicherelement zu greifen und freizugeben;
einen Arm (605), der dazu ausgelegt ist, die Hand zu einer vorbestimmten Position zu bewegen;
eine Aspirationseinheit (611), die dazu ausgelegt ist, Kondenswasser auf einer Rückseite eines Deckels einer Reagenskühlungseinrichtung der automatischen Analysevorrichtung zu aspirieren; und
eine Arbeitsunterstützungsvorrichtungs-Steuerung (602), die dazu ausgelegt ist, die Arbeitsunterstützungsvorrichtungs-Kommunikationseinheit, die Fortbewegungseinheit, die Hand, den Arm und die Aspirationseinheit zu steuern,
wobei, wenn die Arbeitsunterstützungsvorrichtungs-Kommunikationseinheit ein erstes Anweisungssignal von der automatischen Analysevorrichtung empfängt, die Arbeitsunterstützungsvorrichtungs-Steuerung dazu ausgelegt ist, die Fortbewegungseinheit zu veranlassen, die Bewegung zur vorbestimmten Position zu beenden, und die Kommunikationseinheit für die automatische Analysevorrichtung zu veranlassen, ein Bewegungsbeendigungssignal an die automatische Analysevorrichtung nach der Beendigung der Bewegung zu übertragen, und
wenn die Arbeitsunterstützungsvorrichtungs-Kommunikationseinheit ein zweites Anweisungssignal von der automatischen Analysevorrichtung empfängt, nachdem der Antriebsmechanismus automatisch einen Vorbereitungsvorgang für das Laden und/oder Entladen durchgeführt hat und die Kommunikationseinheit für die automatische Analysevorrichtung automatisch das zweite Anweisungssignal an die Arbeitsunterstützungsvorrichtung übertragen hat, die Arbeitsunterstützungsvorrichtungs-Steuerung dazu ausgelegt ist, den Arm und die Hand zu veranlassen, das Laden oder Entladen des Speicherelements zu unterstützen.

8. Arbeitsunterstützungsvorrichtung nach Anspruch 7, weiter umfassend eine Leseeinrichtung (609), die dazu ausgelegt ist, Identifikationsinformationen zu lesen, die dem Speicherelement gegeben wurden,
wobei die Arbeitsunterstützungsvorrichtungs-Steuerung (602) dazu ausgelegt ist, das Laden des vorbestimmten Speicherelements unter mehreren Speicherelementen basierend auf den Identifikationsinformationen zu unterstützen.

9. Arbeitsunterstützungsvorrichtung nach Anspruch 7, wobei
die Arbeitsunterstützungsvorrichtung eine Speicherelementhalterung (612) umfasst, die dazu ausgelegt ist, das Speicherelement, das neu in den automatischen Analysator geladen werden soll, oder das Speicherelement, das zum Entsorgen entladen werden soll, zu halten.

10. Arbeitsunterstützungsvorrichtung nach Anspruch 9, ferner umfassend eine Leseeinrichtung (612), die Identifikationsinformationen liest, die dem Speicherelement gegeben wurden,
wobei die Arbeitsunterstützungsvorrichtungs-Steuerung (602) dazu ausgelegt ist, basierend auf den Identifikationsinformationen, das Laden des Speicherelements mit dem jüngsten Verfallsdatum unter mehreren Speicherelementen in der Speicherelementhalterung zu unterstützen.

11. Automatisches Analysesystem, umfassend:
den automatische Analysevorrichtung (1) nach Anspruch 1; und
die Arbeitsunterstützungsvorrichtung (6) nach Anspruch 7, die dazu ausgelegt ist, mit der automatischen Analysevorrichtung zu kommunizieren, um Arbeitsunterstützung durchzuführen, um die Arbeit des Ladens und/oder Entladens eines Speicherelements zu unterstützen, das in der automatischen Analysevorrichtung verwendet wird,
wobei die Kommunikationseinheit für die automatische Analysevorrichtung dazu ausgelegt ist, ein erstes Anweisungssignal für erste Arbeitsunterstützung an die Arbeitsunterstützungsvorrichtung zu übertragen;
wenn die Arbeitsunterstützungsvorrichtungs-Kommunikationseinheit das erste Anweisungssignal von der automatischen Analysevorrichtung empfängt, die Arbeitsunterstützungsvorrichtungs-Steuerung dazu ausgelegt ist, die Fortbewegungseinheit zu veranlassen, die Bewegung zur vorbestimmten Position zu beenden, und die automatische Kommunikationseinheit für die automatische Analysevorrichtung zu veranlassen, ein Bewegungsbeendigungssignal an die automatische Analysevorrichtung nach der Beendigung der Bewegung zu übertragen;
wenn die Kommunikationseinheit für die automatische Analysevorrichtung das Bewegungsbeendigungssignal für die erste Arbeitsunterstützung von der Arbeitsunterstützungsvorrichtung empfängt, nachdem die Fortbewegungseinheit die Bewegung zur vorbestimmten Position abgeschlossen hat und die Arbeitsunterstützungsvorrichtungs-Kommunikationseinheit das Bewegungsbeendigungssignal an die automatische Analysevorrichtung übertragen hat, die Steuerung für die automatische Analysevorrichtung dazu ausgelegt ist, den Antriebsmechanismus automatisch dahingehend zu steuern, einen Vorbereitungsvorgang für das Laden und/oder Entladen durchzuführen, und die automatische Analysator-Kommunikationseinheit dahingehend zu steuern, automatisch ein zweites Anweisungssignal für zweite Arbeitsunterstützung zum Laden und/oder Entladen des Speicherelements an die Arbeitsunterstützungsvorrichtung zu übertragen; und
wenn die Arbeitsunterstützungsvorrichtungs-Kommunikationseinheit das zweite Anweisungssignal von der automatischen Analysevorrichtung empfängt, nachdem der Antriebsmechanismus automatisch einen Vorbereitungsvorgang für das Laden und/oder Entladen durchgeführt hat und die Kommunikationseinheit für die automatische Analysevorrichtung automatisch das zweite Anweisungssignal an die Arbeitsunterstützungsvorrichtung übertragen hat, die Arbeitsunterstützungsvorrichtungs-Steuerung dazu ausgelegt ist, den Arm und die Hand zu veranlassen, das Laden oder Entladen des Speicherelements zu unterstützen.

## Revendications

1. Analyseur automatique (1, 2) comprenant :
un mécanisme (72) d'entraînement adapté à être entraîné pour utiliser un échantillon ou un réactif stocké dans un élément de stockage ;
un contrôleur (71) d'analyseur automatique adapté à commander le mécanisme d'entraînement ;
un refroidisseur de réactifs ; et
une unité (74) de communication d'analyseur automatique adaptée à communiquer avec un dispositif (6) d'aide au travail effectuant une aide au travail pour aider à un travail de chargement et/ou déchargement de l'élément de stockage et comprenant une unité (610) de communication de dispositif d'aide au travail pour communiquer avec l'analyseur automatique, une unité (604) de déplacement pour un déplacement jusqu'à un emplacement différent de l'analyseur automatique en fonction d'un type de l'élément de stockage, une main (606) pour saisir et libérer l'élément de stockage, un bras (605) pour déplacer la main jusqu'à une position prédéterminée, une unité (611) d'aspiration pour aspirer de l'eau de condensation sur une surface de dos d'un couvercle d'un refroidisseur de réactif de l'analyseur automatique, et un contrôleur (602) de dispositif d'aide au travail pour commander l'unité de communication de dispositif d'aide au travail, l'unité de déplacement, la main, le bras, et l'unité d'aspiration ; dans lequel
l'unité de communication d'analyseur automatique est adaptée à transmettre un premier signal d'instruction pour première aide au travail au dispositif d'aide au travail ;
lorsque l'unité de communication d'analyseur automatique reçoit un signal de fin de déplacement pour la première aide au travail depuis le dispositif d'aide au travail après que l'unité de déplacement a terminé le déplacement jusqu'à la position prédéterminée et que l'unité de communication de dispositif d'aide au travail a transmis le signal de fin de déplacement à l'analyseur automatique, le contrôleur d'analyseur automatique est adapté à commander automatiquement le mécanisme d'entraînement pour effectuer une opération de préparation pour le chargement et/ou déchargement et à commander l'unité de communication d'analyseur automatique pour transmettre automatiquement un deuxième signal d'instruction pour deuxième aide au travail de chargement et/ou déchargement de l'élément de stockage au dispositif d'aide au travail, dans lequel le deuxième signal d'instruction amène le contrôleur de dispositif d'aide au travail à commander l'unité d'aspiration pour aspirer l'eau de condensation adhérant à la surface de dos du couvercle.

2. Analyseur automatique selon la revendication 1, dans lequel
le dispositif (6) d'aide au travail est un robot automoteur qui est adapté à être entraîné de façon autonome pour effectuer l'aide au travail,
lorsque l'unité (74) de communication d'analyseur automatique transmet le premier signal d'instruction au dispositif d'aide au travail et reçoit le signal de fin de déplacement transmis par le dispositif d'aide au travail lorsque le dispositif d'aide au travail s'est déplacé et a terminé le déplacement jusqu'à la position prédéterminée, le contrôleur (71) d'analyseur automatique est adapté à commander le mécanisme (72) d'entraînement de façon à ce que l'élément de stockage puisse être chargé et/ou déchargé, et à commander l'unité de communication d'analyseur automatique pour transmettre le deuxième signal d'instruction au dispositif d'aide au travail.

3. Analyseur automatique selon la revendication 1, dans lequel
l'élément de stockage est une pluralité de récipients (201) de réaction qui stockent une solution de réaction dans laquelle l'échantillon et le réactif sont mélangés, et sont agencés sur une circonférence d'un disque (207) de réaction,
le mécanisme (72) d'entraînement est adapté à faire tourner le disque de réaction, et
lorsque l'unité (74) de communication d'analyseur automatique reçoit le signal de fin de déplacement depuis le dispositif (6) d'aide au travail après que le dispositif d'aide au travail a effectué une aide au remplacement d'un récipient de réaction lorsque le récipient de réaction à remplacer est situé à une position prédéterminée, le contrôleur (71) d'analyseur automatique est adapté à commander le mécanisme d'entraînement pour faire tourner le disque de réaction de façon à ce que le récipient de réaction à remplacer en suivant soit situé à la position prédéterminée, et à commander l'unité de communication d'analyseur automatique pour transmettre le deuxième signal d'instruction au dispositif d'aide au travail après la rotation du disque de réaction.

4. Analyseur automatique selon la revendication 2, dans lequel
l'élément de stockage est une bouteille (113) de détergent stockant un détergent qui est un réactif de système,
le mécanisme (72) d'entraînement est adapté à déplacer une buse (115) dans un sens vertical, la buse étant configurée pour aspirer le détergent depuis la bouteille de détergent,
lorsque le mécanisme d'entraînement rétracte la buse vers le haut, l'unité (74) de communication d'analyseur automatique est adaptée à transmettre le deuxième signal d'instruction au dispositif (6) d'aide au travail, et
lorsque l'unité de communication d'analyseur automatique reçoit le signal de fin de déplacement depuis le dispositif d'aide au travail après que l'aide au remplacement de la bouteille de détergent a été effectuée par le dispositif d'aide au travail, le contrôleur (71) d'analyseur automatique est adapté à commander le mécanisme d'entraînement pour insérer la buse dans la bouteille de détergent.

5. Analyseur automatique selon la revendication 2, dans lequel
l'élément de stockage est une pluralité de récipients (203) pour réactif qui stockent un réactif et sont agencés sur une circonférence d'un disque de réactifs dans un refroidisseur (204) de réactifs,
le mécanisme (72) d'entraînement est configuré pour déverrouiller un couvercle (212) du refroidisseur de réactifs,
lorsque le mécanisme d'entraînement déverrouille le couvercle, l'unité (74) de communication d'analyseur automatique est adaptée à transmettre le deuxième signal d'instruction au dispositif (6) d'aide au travail, et
après que l'aide au remplacement des récipients pour réactif a été effectuée par le dispositif d'aide au travail, l'unité de communication d'analyseur automatique est adaptée à recevoir le signal de fin de déplacement depuis le dispositif d'aide au travail.

6. Analyseur automatique selon la revendication 1, comprenant en outre un calculateur (73) de temps de travail pour calculer un temps de travail pour charger et/ou décharger l'élément de stockage, dans lequel
l'unité (74) de communication d'analyseur automatique est adaptée à transmettre un signal d'instruction pour la première aide au travail au dispositif (6) d'aide au travail sur la base du temps de travail calculé par le calculateur de temps de travail.

7. Dispositif (6) d'aide au travail pour effectuer une aide au travail pour aider à un travail de chargement et/ou déchargement d'un élément de stockage qui est utilisé dans un analyseur automatique comprenant un mécanisme (72) d'entraînement adapté à être entraîné pour utiliser un échantillon ou un réactif stocké dans l'élément de stockage, un contrôleur (71) d'analyseur automatique adapté à commander le mécanisme d'entraînement, et une unité (74) de communication d'analyseur automatique adaptée à communiquer avec le dispositif d'aide au travail, dans lequel le dispositif d'aide au travail comprend :
une unité (610) de communication de dispositif d'aide au travail adaptée à communiquer avec l'analyseur automatique ;
une unité (604) de déplacement adaptée à un déplacement jusqu'à un emplacement différent de l'analyseur automatique en fonction d'un type de l'élément de stockage ;
une main (606) adaptée à saisir et libérer l'élément de stockage ;
un bras (605) adapté à déplacer la main jusqu'à une position prédéterminée ;
une unité (611) d'aspiration adaptée à aspirer de l'eau de condensation sur une surface de dos d'un couvercle d'un refroidisseur de réactif de l'analyseur automatique ; et
un contrôleur (602) de dispositif d'aide au travail adapté à commander l'unité de communication de dispositif d'aide au travail, l'unité de déplacement, la main, le bras, et l'unité d'aspiration, dans lequel
lorsque l'unité de communication de dispositif d'aide au travail reçoit un premier signal d'instruction depuis l'analyseur automatique, le contrôleur de dispositif d'aide au travail est adapté à amener l'unité de déplacement à terminer le déplacement jusqu'à la position prédéterminée et à amener l'unité de communication d'analyseur automatique à transmettre un signal de fin de déplacement à l'analyseur automatique après la fin du déplacement, et
lorsque l'unité de communication de dispositif d'aide au travail reçoit un deuxième signal d'instruction depuis l'analyseur automatique après que le mécanisme d'entraînement a automatiquement effectué une opération de préparation pour un chargement et/ou déchargement et que l'unité de communication d'analyseur automatique a automatiquement transmis le deuxième signal d'instruction au dispositif d'aide au travail, le contrôleur de dispositif d'aide au travail est adapté à amener le bras et la main à aider au chargement ou au déchargement de l'élément de stockage.

8. Dispositif d'aide au travail selon la revendication 7, comprenant en outre un lecteur (609) adapté à lire des informations d'identification données à l'élément de stockage, dans lequel
le contrôleur (602) de dispositif d'aide au travail est adapté à aider au chargement de l'élément de stockage prédéterminé parmi une pluralité des éléments de stockage sur la base des informations d'identification.

9. Dispositif d'aide au travail selon la revendication 7, dans lequel
le dispositif d'aide au travail inclut un support (612) d'éléments de stockage adapté à maintenir l'élément de stockage devant être nouvellement chargé dans l'analyseur automatique ou l'élément de stockage devant être déchargé pour mise au rebut.

10. Dispositif d'aide au travail selon la revendication 9, comprenant en outre un lecteur (612) qui lit des informations d'identification données à l'élément de stockage, dans lequel
le contrôleur (602) de dispositif d'aide au travail est adapté à aider, sur la base des informations d'identification, au chargement de l'élément de stockage avec la date d'expiration la plus récente parmi une pluralité des éléments de stockage dans le support d'éléments de stockage.

11. Système d'analyse automatique comprenant :
l'analyseur automatique (1) selon la revendication 1 ; et
le dispositif (6) d'aide au travail selon la revendication 7, adapté à communiquer avec l'analyseur automatique pour effectuer une aide au travail pour aider à un travail de chargement et/ou déchargement d'un élément de stockage qui est utilisé dans l'analyseur automatique, dans lequel
l'unité de communication d'analyseur automatique est adaptée à transmettre un premier signal d'instruction pour première aide au travail au dispositif d'aide au travail ;
lorsque l'unité de communication de dispositif d'aide au travail reçoit le premier signal d'instruction depuis l'analyseur automatique, le contrôleur de dispositif d'aide au travail est adapté à amener l'unité de déplacement à terminer le déplacement jusqu'à la position prédéterminée et à amener l'unité de communication d'analyseur automatique à transmettre un signal de fin de déplacement à l'analyseur automatique après la fin du déplacement ;
lorsque l'unité de communication d'analyseur automatique reçoit le signal de fin de déplacement pour la première aide au travail depuis le dispositif d'aide au travail après que l'unité de déplacement a terminé le déplacement jusqu'à la position prédéterminée et que l'unité de communication de dispositif d'aide au travail a transmis le signal de fin de déplacement à l'analyseur automatique, le contrôleur d'analyseur automatique est adapté à commander automatiquement le mécanisme d'entraînement pour effectuer une opération de préparation pour le chargement et/ou le déchargement et à commander l'unité de communication d'analyseur automatique pour transmettre automatiquement un deuxième signal d'instruction pour deuxième aide au travail de chargement et/ou déchargement de l'élément de stockage au dispositif d'aide au travail ; et
lorsque l'unité de communication de dispositif d'aide au travail reçoit le deuxième signal d'instruction depuis l'analyseur automatique après que le mécanisme d'entraînement a automatiquement effectué une opération de préparation pour chargement et/ou déchargement et que l'unité de communication d'analyseur automatique a automatiquement transmis le deuxième signal d'instruction au dispositif d'aide au travail, le contrôleur de dispositif d'aide au travail est adapté à amener le bras et la main à aider au chargement ou au déchargement de l'élément de stockage.
